Europäisches Patentamt

European Patent Office

Office européen des brevets

(19)

(11) Numéro de publication : **0 310 499 B1**

(12) # FASCICULE DE BREVET EUROPEEN

(45) Date de publication du fascicule du brevet :
**27.11.91 Bulletin 91/48**

(51) Int. Cl.$^5$ : **B29C 53/08, D06J 1/12, D04H 1/00, D04C 1/06**

(21) Numéro de dépôt : **88402445.6**

(22) Date de dépôt : **28.09.88**

(54) **Procédé et dispositif pour la fabrication d'une structure tubulaire fibreuse stratifiée utilisable comme structure de renfort pour pièce composite.**

(30) Priorité : **28.09.87 FR 8713387**

(43) Date de publication de la demande :
**05.04.89 Bulletin 89/14**

(45) Mention de la délivrance du brevet :
**27.11.91 Bulletin 91/48**

(84) Etats contractants désignés :
**BE CH DE GB IT LI SE**

(56) Documents cités :
**FR-A- 2 565 262**
**FR-A- 2 596 431**

(73) Titulaire : **SOCIETE EUROPEENNE DE PROPULSION (S.E.P.) S.A.**
**24, rue Salomon de Rothschild**
**F-92150 Suresnes (FR)**

(72) Inventeur : **Vives, Michel Christian**
**No. 33 Le Bois de la Landotte Le Taillan Medoc**
**F-33320 Eysines (FR)**
Inventeur : **Bertone, Christian**
**29, rue du Parc du Dehes**
**F-33480 Castelnau de Medoc (FR)**

(74) Mandataire : **Joly, Jean-Jacques et al**
**CABINET BEAU DE LOMENIE 55, rue d'Amsterdam**
**F-75008 Paris (FR)**

Jouve, 18, rue Saint-Denis, 75001 PARIS

## Description

La présente invention concerne la fabrication d'une structure tubulaire stratifiée formée par des couches de matériau fibreux qui sont superposées en direction axiale et s'étendent chacune depuis la surface intérieure jusqu'à la surface extérieure de la structure.

De telles structures sont notamment utilisables comme structures de renfort constituant des préformes pour la réalisation de pièces en matériau composite, par exemple des protections thermiques ablatives pour propulseurs à poudre. Les pièces composites sont obtenues par densification des préformes par dépôt à coeur d'un matériau formant matrice, par exemple une résine thermodurcissable, du carbone ou un autre matériau réfractaire, par exemple du type céramique. La densification est réalisée de façon bien connue en soi en mettant en oeuvre des procédés d'infiltration chimique en phase vapeur, d'imprégnation liquide suivie de traitement thermique, ou encore d'infiltration précédée de préimprégnation.

La présente invention a plus particulièrement pour objet de fournir un procédé et un dispositif destinés à la fabrication de structures obtenues à partir d'une tresse tubulaire dont la paroi est repliée sur elle-même pour former des ondulations ou replis qui constituent des couches de matériau fibreux superposées en direction axiale.

Une telle structure est décrite dans la demande de brevet français No 8604531 déposée au nom de la demanderesse. L'utilisation d'une tresse tubulaire permet de réaliser une structure ayant toute dimension axiale désirée. De plus, grâce à la déformabilité de la tresse, on peut conférer aux couches superposées, formées par les ondulations de la tresse, toute orientation désirée par rapport à l'axe de la structure; en particulier, dans le cas d'une application à la fabrication de protections thermiques composites, la résistance à l'ablation peut être améliorée par une orientation à "lisse-poil" des fibres par rapport à l'écoulement gazeux. De plus encore, dans chaque couche, les fibres s'étendent depuis l'intérieur jusqu'à l'extérieur de la structure tubulaire de sorte que, même si la partie interne se dégrade sous l'action d'un écoulement gazeux intense à haute température, la partie froide externe des fibres reste bien ancrée et l'orientation des fibres favorise l'évacuation des gaz de pyrolyse provenant de la dégradation de la partie interne, sans délaminer la structure.

Les structures tubulaires obtenues en formant des couches superposées par repli sur elle-même de la paroi d'une tresse tubulaire présentent donc des qualités particulières dans des applications comme structures de renfort pour certaines pièces composites. Aussi, la présente invention a-t-elle pour but de fournir un procédé et un dispositif permettant une automatisation de la fabrication de telles structures de façon à réduire les coûts de fabrication et à obtenir des structures ayant des caractéristiques parfaitement reproductibles.

Conformément l'invention, le procédé de fabrication comprend les étapes qui consistent à :

— amener la tresse tubulaire sur un mandrin dont le diamètre intérieur correspond à celui de la structure à fabriquer, en faisant passer la tresse autour d'une tête de formage qui est montée sur le mandrin et dont le diamètre extérieur correspond à celui de la structure à fabriquer, et

— bobiner au moins un fil suivant une trajectoire hélicoïdale sur la tresse, autour du mandrin et à l'avant de la tête de formage, entre celle-ci et une contre-pièce dont les faces en regard ont des formes correspondant à celle des ondulations à former, le bobinage du fil étant réalisé tout en écartant progressivement la tête de formage de la contre-pièce, au fur et à mesure de la formation des ondulations.

Le bobinage du fil est réalisé en entraînant la tresse en rotation autour de l'axe du mandrin tandis que le fil est avantageusement guidé dans un passage de la tête de formage qui est maintenue dans une position angulaire fixe par rapport à l'axe du mandrin. Une force de rappel constante peut être exercée en permanence, rapprochant la tête de formage et la contre-pièce l'une de l'autre pour enserrer les ondulations déjà formées.

Selon un autre de ses aspects, la présente invention a pour but de fournir un dispositif à mettre en oeuvre un procédé tel que défini ci-dessus.

Conformément à l'invention, ce dispositif comporte :

— un mandrin rotatif dont le diamètre intérieur correspond à celui de la structure à fabriquer,

— une tête de formage montée sur le mandrin et dont le diamètre extérieur correspond à celui de la structure à fabriquer,

— une contre-pièce montée sur le mandrin, face à la tête de formage, les faces en regard de la tête de formage et de la contre-pièce ayant des formes correspondant à celle des ondulations à former, et l'une au moins de la tête de formage et de la contre-pièce étant mobile en translation parallèlement à l'axe du mandrin,

— des moyens pour amener la tresse sur le mandrin par dessus la tête de formage et pour solidariser la tresse en rotation avec le mandrin, et

— des moyens pour amener au moins un fil afin de bobiner celui-ci suivant une trajectoire hélicoïdale sur la tresse, autour du mandrin et entre la tête de formage et la contre-pièce, de manière à former des ondulations par déformation de la tresse au moyen du fil devant la tête de formage tandis que la contre-pièce et la tête de formage sont progressivement écartées l'une de l'autre parallèlement à l'axe du mandrin.

La tête de formage est de préférence bloquée en rotation autour de l'axe du mandrin et présente un passage pour le guidage du fil bobiné sur la tresse.

L'écartement mutuel entre la tête de formage et la contre-pièce est réalisé en déplaçant axialement la tête de formage sur le mandrin, tandis que la contre-pièce peut être réalisée sous forme d'une pièce de serrage pour bloquer une extrémité de la tresse sur le mandrin au début de l'opération de fabrication de la structure.

L'invention sera mieux comprise à la lecture de la description faite ci-après, à titre indicatif mais non limitatif, en référence aux dessins annexés sur lesquels:

— la figure 1 est une vue schématique en coupe d'une structure tubulaire stratifiée formée par repli sur elle-même de la paroi d'une tresse tubulaire,

— la figure 2 est une vue générale schématique d'un dispositif conforme à l'invention,

— la figure 3 est une vu partielle en perspective montrant de façon plus détaillée le mandrin, la tête de formage et la contre-pièce faisant partie du dispositif de la figure 2,

— les figures 4 et 5 sont des vues très schématiques partielles illustrant les étapes successives de mise en place d'une tresse tubulaire sur le dispositif de la figure 2, et de formation et superposition d'ondulations de la paroi de la tresse,

— les figures 6 et 7 illustrent très schématiquement une variante du procédé conforme à l'invention permettant de réaliser un autre type d'ondulations de la paroi de la tresse.

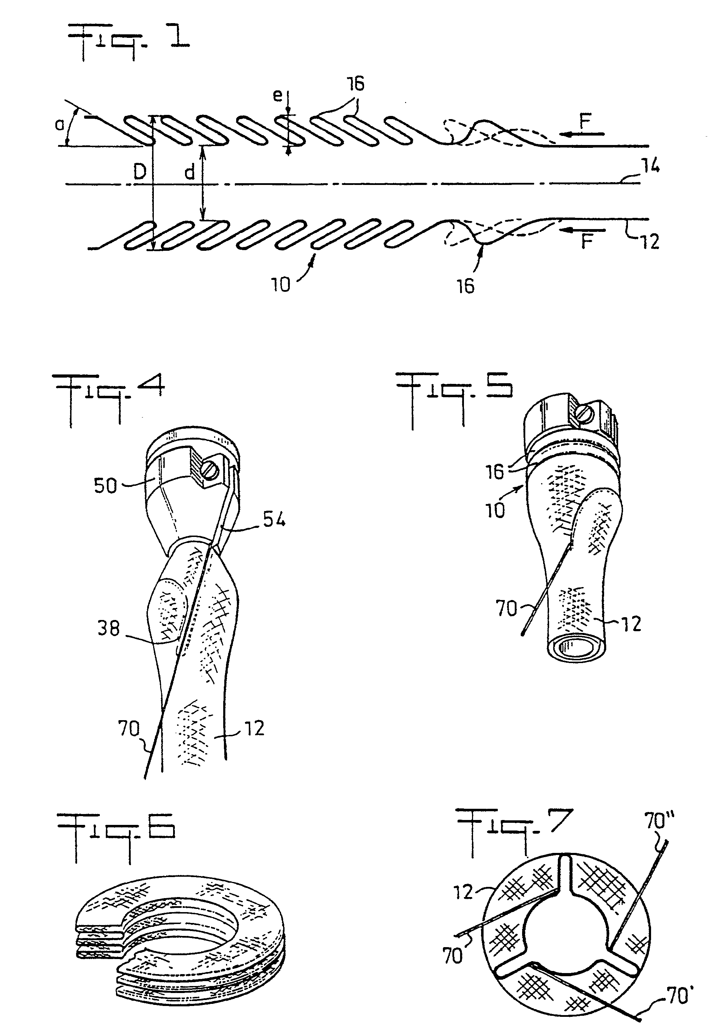

La figure 1 illustre la formation d'une structure tubulaire stratifiée telle que décrite dans la demande de brevet français No 8604531 précitée. La structure 10 est réalisée en repliant sur elle-même une tresse tubulaire 12 suivant son axe 14 pour former des replis ou ondulations 16. Les ondulations 16 sont appliquées les unes contre les autres pour former des couches superposées en direction axiale. Dans l'exemple illustré, les ondulations sont disposées en biais, c'est-à-dire forment par rapport à l'axe 14 un angle $a$ compris entre quelques degrés et 90 degrés. L'amplitude des ondulations détermine, avec l'angle $a$, l'épaisseur $e$ de la structure 10, c'est-à-dire la différence entre ses diamètres extérieur D et intérieur $d$. Les diamètres extérieur D et intérieur $d$ doivent rester dans les limites de déformabilité du diamètre de la tresse tubulaire 12.

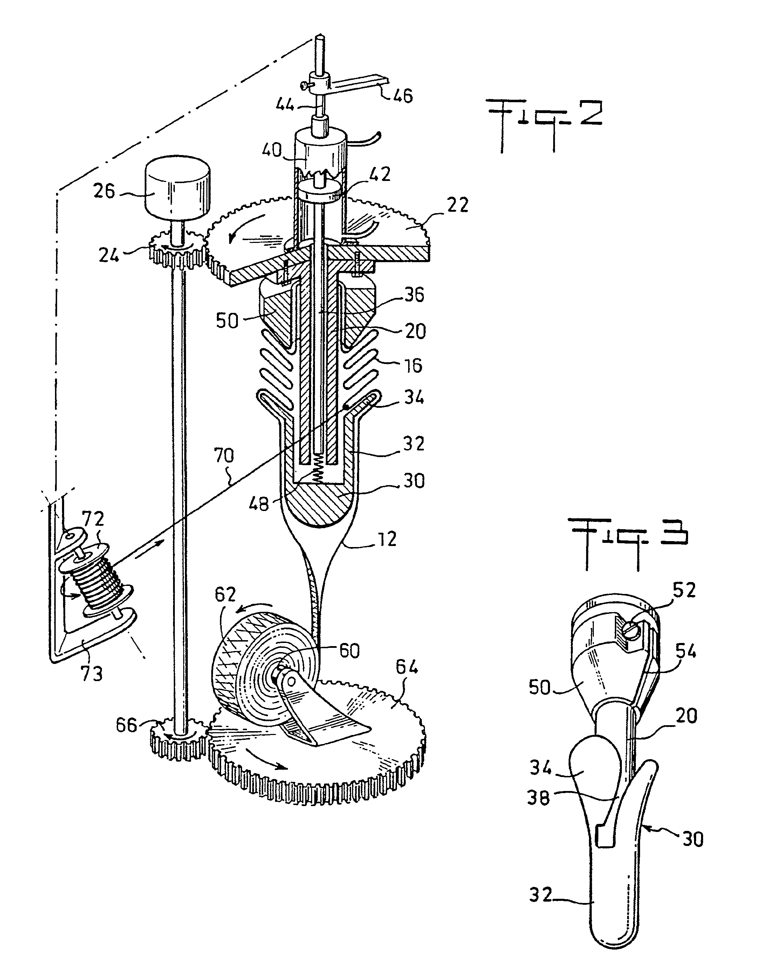

Le dispositif illustré par les figures 2 et 3 comprend un mandrin rotatif 20 formé par un tube dont le diamètre extérieur est égal au diamètre intérieur $d$ de la structure tubulaire à fabriquer. A une première extrémité, le mandrin 20 est fixé à une roue dentée 22 qui coopère avec un pignon 24 couplé à l'arbre de sortie d'un moteur 26.

Une pièce de mise en forme 30 est montée sur le mandrin 20 à la deuxième extrémité de celui-ci. La pièce 30 comprend un corps tubulaire 32 engagé sur la partie terminale du mandrin 20. Du côté de la première extrémité du mandrin, le corps 32 se termine par une partie de plus grand diamètre 34 formant tête de formage. Dans l'exemple illustré, la face frontale de la tête 34 tournée vers la première extrémité du mandrin est de forme tronconique avec un diamètre maximum correspondant au diamètre extérieur D de la structure tubulaire à fabriquer et un demi-angle au sommet correspondant à l'inclinaison désirée $a$ des ondulations de la tresse par rapport à l'axe de la structure tubulaire.

La pièce 30 n'est pas solidaire du mandrin 20 en rotation et peut être déplacée par rapport à celui-ci en translation en direction axiale. A cet effet, le corps 32 est fixé à une extrémité d'une tige 36 qui traverse le mandrin 20 le long du passage axial central de celui-ci. A son autre extrémité, la tige 36 est solidaire du piston 42 d'un vérin à double effet 40. Du coté opposé à la tige 36, le piston 42 est prolongé par une tige 44 qui fait saillie hors du corps du vérin pour être fixée à un support 46 interdisant toute rotation de la pièce 30 autour de l'axe du mandrin 20.

La pièce 30 coopère avec une pièce de blocage ou contre-pièce 50 montée sur le mandrin 20 à la première extrémité de celui-ci. La face frontale de la contre-pièce 50 tournée vers la deuxième extrémité du mandrin a une forme tronconique semblable à celle de la face frontale de la tête 34. De la sorte, comme décrit plus loin de façon plus détaillée, on confère aux ondulations de la tresse la forme voulue en formant et en enserrant celles-ci dans l'intervalle entre la tête 34 et la contre-pièce 50.

La contre-pièce 50 est avantageusement réalisée sous forme d'une bague cylindro-tronconique fendue de manière à constituer également un collier de serrage pour bloquer l'extrémité de la tresse sur le mandrin 20. Le serrage est simplement réalisé au moyen d'une vis 52 traversant la fente 54 de la contre-pièce 50. Bien entendu, tout autre dispositif approprié pourra être utilisé pour le pincement de la tresse.

La tresse tubulaire 12 est amenée sur le mandrin 20, par-dessus la pièce de mise en forme 30. A cet effet, la tresse est dévidée d'une bobine 60 sur laquelle elle est stockée en rouleau 62 à l'état aplati. La bobine 60 est solidaire d'une roue dentée 64 qui engrène avec un pignon 66 monté sur l'arbre du moteur 26 pour être entraînée en rotation avec la même vitesse angulaire que le mandrin 20.

Dans l'exemple illustré, le mandrin 20, la tête de mise en forme 30 et la roue 64 supportant la bobine 60 sont alignés suivant un axe vertical. L'ensemble pourrait toutefois être disposé horizontalement.

Comme décrit plus loin en détail, les fonds des ondulations formées entre la tête 34 et la contre-pièce 50 sont définis par bobinage d'un fil 70 sur la tresse autour du mandrin 20. Le fil 70 est tiré d'une bobine de stockage 72 et, comme décrit plus loin, a une extrémité fixée à la première extrémité du mandrin en passant, par exemple, dans la fente radiale 54 de la contre-pièce 50. Le bobinage du fil est réalisé par la rotation du mandrin.

Le fil 70 est guidé par une fente de guidage 38 sensiblement rectiligne formée dans la tête 34. La fente 38 s'étend depuis le bord frontal extrême de la tête 34, auquel elle se raccorde progressivement, jusqu'au corps tubulaire 32, au voisinage du raccordement de celui-ci avec la tête 34. Quand le mandrin 20 est entraîné en rotation, le fil 70 est dévidé. Ce fil, par tension, contraint la tresse à se déformer en l'obligeant à passer dans la fente 38 jusqu'au diamètre du mandrin 20 sur lequel elle est serrée.

Les ondulations de la tresse sont empilées les unes sur les autres entre la tête 34 et la contre-pièce 50. Aussi, au fur et à mesure de la formation de la texture, la distance entre la contre-pièce 50 et la tête 34 augmente progressivement.

On confère donc au vérin 40 une course suffisante compte-tenu de la longueur de la texture à fabriquer, en direction axiale. Des moyens élastiques, constitués par un ressort de traction 48, sont interposés entre la tige 36 et la tête de formage 34 pour solliciter celle-ci en permanence en direction de la contre-pièce 50.

La force de rappel rapprochant l'une vers l'autre la tête de formage 34 et la contrepièce 50 est de préférence constante et réglée par asservissement du vérin 40 au niveau du ressort 48. En effet, après réglage de la force de rappel par compression du ressort 48, il est possible de déterminer la variation de calage du ressort et d'asservir le vérin. A cet effet, un dispositif de détection est prévu qui agit en réponse à une variation de longueur du ressort, à partir de l'état de celui-ci correspondant à la force de compression réglée initialement, pour commander l'admission de fluide dans le vérin 40 d'un côté ou de l'autre du piston. Le dispositif de détection consiste par exemple en un palpeur (non représenté) qui est fixé à l'extrémité d'une tige traversant la tige 36 et le ressort 48 et s'appuie sur la pièce 30 et qui agit, par l'intermédiaire de la tige qui le porte, sur un tiroir de distribution de fluide au vérin 40.

La position angulaire du fil 70 par rapport à la tête de formage 34 doit de préférence être constante. Un support 73 de la bobine 72, solidaire de l'extrémité de l'axe 44 permet un déplacement axial simultané de la bobine 72 et de la tête de formage 34.

Les figures 4 et 5 illustrent des phases successives de formation et empilements des ondulations de la tresse 12.

Au démarrage (figure 4), l'extrémité libre de la tresse 12 est amenée jusqu'à la première extrémité du mandrin 20 en passant autour de la pièce 30 de mise en forme, qui est en position reculée, et est solidarisée avec le mandrin par serrage de la contre-pièce 50. Le diamètre extérieur du mandrin ainsi que le diamètre intérieur de la tresse 12 à l'état non déformé sont choisis de manière à être sensiblement égaux au diamètre intérieur de la structure à fabriquer.

Le fil 70 est ensuite amené, en étant engagé dans la fente 38, jusqu'au fond de celle-ci, par dessus la tresse 12, et dans la fente 54. L'extrémité libre du fil 70 est fixée à la première extrémité du mandrin 20, par exemple en bobinant le fil 70 sur plusieurs tours sur le mandrin.

Le vérin 40 est alors commandé pour amener la tête 34 en position avancée au voisinage de la contre-pièce 50. Le fil 70 serrant la tresse sur le mandrin entre la tête 34 et la contre-pièce 50, le mouvement de la tête 34 provoque la formation d'une première ondulation 16 de la tresse.

De nouvelles ondulations 16 sont ensuite formées successivement en entraînant le mandrin 20 et la tresse 12 en rotation simultanément avec un mouvement de recul de la tête de formage. Le fil 70 est ainsi bobiné suivant un trajet hélicoïdal sur la tresse 12, autour du mandrin. La déformation de la tresse 12 entraînée en rotation par le fil 70 guidé dans la fente 38 dont la position angulaire est fixe provoque la formation des ondulations tout en appelant la longueur nécessaire de tresse. Le mouvement de recul de la tête 34 est contrôlé par le vérin 40, le ressort 48 permettant de maintenir les ondulations 16 enserrées entre la tête de formage 34 et la contre-pièce 50. Une structure tubulaire stratifiée 10 est ainsi réalisée avec les ondulations 16 superposées en direction axiale et inclinées par rapport à l'axe suivant un angle défini par les inclinaisons des faces frontales de la tête 34 et de la contre-pièce 50 (figure 5).

La structure 10 réalisée comme décrit ci-avant présente des ondulations 16 de forme conique qui suivent la trajectoire hélicoïdale du fil 70, une ondulation étant formée par tour de fil.

D'autres ondulations hélicoïdales peuvent être obtenues, en particulier en formant plusieurs ondulations par tour du mandrin.

La figure 6 par exemple montre un tronçon de texture avec trois ondulations par tour. Une telle texture est réalisée avec un dispositif qui se distingue de celui des figures 2 et 3 en ce que trois fils de bobinage 70, 70', 70" sont simultanément amenés comme montré schématiquement sur la figure 7. Les fils 70, 70', 70" sont amenés au contact de la texture en des zones angulairement équidistantes. A cet effet, la tête de mise en forme (non représentée) présente trois fentes de guidage disposées autour de la tête à intervalles réguliers. Cet exemple n'est pas limitatif. Il est possible de réaliser de 2 à n ondulations.

Par ailleurs, dans ce qui précède, on a envisagé la formation d'ondulations de forme conique. D'autres formes peuvent être réalisées, par exemple sphériques en conférant aux faces frontales de la tête de for-

mage et de là contre-pièce la forme sphérique désirée.

Le matériau constitutif de la tresse tubulaire 12 est choisi en fonction de l'application envisagée pour la structure. S'agissant de renfort pour pièce composite destinée à être soumise à des contraintes thermiques élevées, on choisira une tresse réalisée à partir de fibres réfractaires ou de précurseurs de celles-ci, par exemple une tresse en fibres PAN (polyacrylonitrile) préoxydé, précurseur de carbone. La tresse est fabriquée à partir des fibres choisies par tout procédé textile connu pour la réalisation de tresse tubulaire.

Le fil de bobinage 70 peut être en un matériau identique à celui constitutif de la tresse et rester ensuite à demeure au sein de la texture. Il est également envisageable d'utiliser un fil en un matériau susceptible d'être éliminé lors d'un traitement ultérieur de la structure, par exemple un matériau éliminé par la chaleur lorsque la structure est portée à la température nécessaire pour la phase de densification, c'est-à-dire formation de la matrice remplissant la porosité de la structure.

Avant densification, la structure tubulaire obtenue peut être renforcée, par exemple en étant soumise à une opération d'aiguilletage en direction non parallèle aux ondulations, ou à une opération d'implantation de fils par mise en oeuvre par exemple de la technique décrite dans le brevet français No 8408439 (publication No 2565262).

Ensuite, pour obtenir la pièce composite désirée, la structure est densifiée par dépôt à coeur d'un matériau formant matrice, par exemple une résine thermodurcissable, du carbone ou un autre matériau réfractaire tel qu'une céramique.

La structure obtenue selon l'invention est bien adaptée à la réalisation de protections thermiques, notamment pour rallonges arrière de propulseurs à poudre, car la résistance à l'ablation causée par l'écoulement de gaz à haute température peut être sensiblement accrue grâce à une orientation à "lisse-poil" des ondulations. De plus, comme déjà indiqué, la continuité des fibres entre le diamètre intérieur et le diamètre extérieur de la texture apporte une meilleure tenue en cas de dégradation d'origine thermique du côté intérieur de la texture.

**Revendications**

1. Procédé pour la fabrication d'une structure fibreuse tubulaire stratifiée à partir d'une tresse tubulaire dont la paroi est repliée sur elle-même pour former des ondulations superposées en direction axiale, procédé caractérisé en ce qu'il comprend les étapes qui consistent à :
— amener la tresse tubulaire (12) sur un mandrin (20) dont le diamètre intérieur correspond à celui de la structure à fabriquer, en faisant passer la tresse autour d'une tête de formage (34) qui est montée sur le mandrin et dont le diamètre extérieur correspond à celui de la structure à fabriquer, et
— bobiner au moins un fil (70) suivant une trajectoire hélicoïdale sur la tresse, autour du mandrin et à l'avant de la tête de formage, entre celle-ci et une contre-pièce (50) dont les faces en regard ont des formes correspondant à celle des ondulations à former, le bobinage du fil étant réalisé tout en écartant progressivement la tête de formage de la contre-pièce, au fur et à mesure de la formation des ondulations.

2. Procédé selon la revendication 1, caractérisé en ce qu'une force constante de rappel élastique est exercée en permanence pour rappeler l'une vers l'autre la tête de formage et la contre-pièce.

3. Procédé selon la revendication 2, caractérisé en ce que la force de rappel est exercée au moyen d'un vérin (40), par l'intermédiaire d'un ressort (48), le vérin (40) étant asservi au niveau du ressort (48) pour maintenir constante ladite force de rappel.

4. Procédé selon l'une quelconque des revendications 1 à 3, caractérisé en ce que le bobinage du fil est réalisé par entraînement en rotation de la tresse (12) autour de l'axe du mandrin (20).

5. Procédé selon la revendication 4, caractérisé en ce que la tête de formage (34) est maintenue dans une position angulaire fixe par rapport à l'axe du mandrin (20), et le fil (70) est guidé dans un passage (38) formé dans la tête de formage pour provoquer la formation des ondulations par déformation de la tresse (12) au moyen du fil bobiné sur la mandrin en étant guidé par la tête de formage.

6. Procédé selon l'une quelconque des revendications 1 à 5, caractérisé en ce que l'on bobine simultanément plusieurs fils (70, 70', 70") sur la tresse (12), autour du mandrin (20).

7. Dispositif pour la fabrication d'une structure fibreuse tubulaire stratifiée à partir d'une tresse tubulaire dont la paroi est repliée sur elle-même pour former des ondulations superposées en direction axiale, dispositif comportant :
— un mandrin rotatif (20) dont le diamètre intérieur correspond à celui de la structure à fabriquer,
— une tête de formage (34) montée sur le mandrin et dont le diamètre extérieur correspond celui de la structure fabriquer,
— une contre-pièce (50) montée sur le mandrin, face à la tête de formage, les faces en regard de la tête de formage et de la contre-pièce ayant des formes correspondant à celle des ondulations (16) former, et l'une au moins de la tête de formage et de la contre-pièce étant mobile en translation parallèlement à l'axe du mandrin,
— des moyens pour amener la tresse sur le mandrin par dessus la tête de formage et pour solidariser la tresse en rotation avec le mandrin, et

— des moyens pour amener au moins un fil (70) afin de bobiner celui-ci suivant une trajectoire hélicoïdale sur la tresse, autour du mandrin et entre la tête de formage et la contre-pièce, de manière à former des ondulations par déformation de la tresse au moyen du fil devant la tête de formage tandis que la contre-pièce et la tête de formage sont progressivement écartées l'une de l'autre parallèlement à l'axe du mandrin.

8. Dispositif selon la revendication 7, caractérisé en ce que la tête de formage (34) est bloquée en rotation autour de l'axe du mandrin (20) mais est mobile en translation parallèlement à cet axe.

9. Dispositif selon la revendication 8, caractérisé en ce qu'un passage (38) est formé dans la tête de formage (34) pour guider le fil (70) bobiné sur la tresse (12) autour du mandrin (20).

10. Dispositif selon l'une quelconque des revendications 8 et 9, caractérisé en ce que la tête de formage (34) est mobile en translation sous l'action d'un vérin (40) par l'intermédiaire d'une tige (36) traversant un passage longitudinal du mandrin (20).

11. Dispositif selon l'une quelconque des revendications 79, caractérisé en ce qu'il comprend des moyens (48) pour rappeler élastiquement la tête de formage (34) en direction de la contre-pièce (50) en exerçant une force de rappel constante.

12. Dispositif selon la revendication 11, caractérisé en ce que lesdits moyens de rappel élastiques consistent en un ressort (48) interposé entre la toute de formage (34) et une tige (36) d'un vérin (40), et des moyens sont prévus pour asservir le vérin (40) au niveau du ressort (48) afin de maintenir constante la force de rappel exercée par celui-ci.

13. Dispositif selon l'une quelconque des revendications 7 à 12, caractérisé en ce que la contre-pièce (50) forme collier de serrage pour bloquer une extrémité de la tresse (12) sur le mandrin (20).

14. Dispositif selon l'une quelconque des revendications 7 13, caractérisé en ce qu'il comprend une bobine (60) de stockage de la tresse (12) et des moyens pour entraîner en rotation la bobine de stockage avec le mandrin (20).

## Patentansprüche

1. Verfahren zur Herstellung einer rohrförmigen geschichteten Faserstruktur, ausgehend von einem rohrförmigen Zopf, dessen Seitenwand auf sich selbst umgeschlagen ist, um in Axialrichtung übereinandergelegte Wellungen zu bilden, wobei das Verfahren dadurch gekennzeichnet ist, daß es die folgenden Schritte aufweist :

Aufnehmen des rohrförmigen Zopfes (12) auf einen Dorn (20), dessen Innendurchmesser demjenigen der herzustellenden Struktur entspricht, unter Aufziehen des Zopfes um einen Bildungskopf (34), der auf dem Dorn angeordnet ist und dessen äußerer Durchmesser jenem der herzustellenden Struktur entspricht, und

Wickeln wenigstens eines Fadens (70) gemäß einer schraubenförmigen Bahn auf den Zopf, um den Dorn herum und vor dem Bildungskopf, zwischen diesem und einem Gegenstück (50), dessen einander gegenüberliegende Seiten Formen aufweisen, die denen der zu bildenden Wellungen entsprechen, wobei das Wickeln des Fadens unter steigendem Beabstanden des Bildungskopfes von dem Gegenstück erfolgt entsprechend der Bildung der Wellungen.

2. Verfahren nach Anspruch 1, **dadurch gekennzeichnet,** daß eine konstante elastische Rückholkraft ständig aufgebracht wird, um den Bildungskopf und das Gegenstück einander zuzubringen.

3. Verfahren nach Anspruch 2, **dadurch gekennzeichnet,** daß die Rückholkraft mittels eines Stelltriebs (40) über eine Feder (48) aufgebracht wird, wobei der Stelltrieb (40) auf der Höhe der Feder (48) angebracht ist, um die Rückholkraft konstant zu halten.

4. Verfahren nach einem der Ansprüche 1 bis 3, **dadurch gekennzeichnet,** daß das Wickeln des Fadens durch in Drehung versetzen des Zopfes (12) um die Achse des Dorns (20) verwirklicht wird.

5. Verfahren nach Anspruch 4, **dadurch gekennzeichnet,** daß der Bildungskopf (34) in einer festen Winkelposition bezüglich der Achse des Dorns (20) gehalten wird, und der Faden (70) in einem Kanal (38) geführt wird, der in dem Bildungskopf ausgebildet ist, um die Bildung der Wellungen durch Verformen des Zopfes (12) mit Hilfe des auf dem Dorn aufgewickelten Fadens hervorzurufen, der von dem Bildungskopf geführt wird.

6. Verfahren nach einem der Ansprüche 1 bis 5, **dadurch gekennzeichnet,** daß gleichzeitig mehrere Fäden (70, 70', 70″) auf den Zopf (12) um den Dorn (20) herum aufgewickelt werden.

7. Vorrichtung zur Herstellung einer geschichteten rohrförmigen Faserstruktur, ausgehend von einem rohrförmigen Zopf, dessen Seitenwand auf sich selbst umgeschlagen ist, um in Axialrichtung übereinanderliegende Wellungen zu erzeugen, wobei die Vorrichtung aufweist :

einen drehenden Dorn (20), dessen innerer Druchmesser dem jener der herzustellenden Struktur entspricht,

einen Bildungskopf (34), der auf dem Dorn angebracht ist und dessen äußerer Durchmesser jenem der herzustellenden Struktur entspricht,

ein Gegenstück (50), das auf dem Dorn angebracht ist gegenüber dem Bildungskopf, wobei die dem Bildungskopf und dem Gegenstück einander gegenüberliegenden Seiten Formen aufweisen, die denen der herzustellenden Wellungen (16) entsprechen, und wenigstens einer von beiden, dem Bildungskopf und dem Gegenstück parallel zur Achse des Dornes bewegbar ist.

Einrichtungen, um den Zopf auf den Dorn über den Bildungskopf aufzubringen, und um den Zopf drehverbunden mit dem Dorn zu machen, und Einrichtungen, um wenigstens einen Faden (70) zu bringen, um diesen gemäß einer schraubenförmigen Bahn auf den Zopf um den Dorn und zwischen dem Bildungskopf und dem Gegenstück aufzuwickeln, derart, um Wellungen durch Deformation des Zopfes mit Hilfe des Fadens vor dem Bildungskopf zu erzeugen, während das Gegenstück und der Bildungskopf wachsend parallel zur Achse des Dorns zueinander beabstandet werden.

8. Vorrichtung nach Anspruch 7, **dadurch gekennzeichnet,** daß der Bildungskopf (34) in Drehung um die Achse des Dorns (20) blockiert ist, jedoch beweglich ist, parallel zu dieser Achse.

9. Vorrichtung nach Anspruch 8, **dadurch gekennzeichnet,** daß ein Kanal (38) in dem Bildungskopf (34) ausgebildet ist, um den Faden (70) zu führen, der auf dem Zopf (12) um den Dorn (20) herum aufgewickelt ist.

10. Vorrichtung nach einem der Ansprüche 8 oder 9, **dadurch gekennzeichnet,** daß der Bildungskopf (34) längsbeweglich ist unter der Einwirkung eines Stelltriebs (40) über eine Stange (36), die einen Längskanal des Dornes (20) durchquert.

11. Vorrichtung nach einem der Ansprüche 7 bis 9, **dadurch gekennzeichnet,** daß sie Einrichtungen (48) aufweist, um den Bildungskopf (34) in Richtung des Gegenstücks (50) elastisch zu drücken unter Aufbringen einer konstanten Rückholkraft.

12. Vorrichtung nach Anspruch 11l, **dadurch gekennzeichnet,** daß die elastischen Rückholeinrichtungen aus einer Feder (48) bestehen, die zwischen dem Bildungskopf (34) und einer Stange (36) eines Stelltriebs (40) angeordnet ist, und daß Einrichtungen vorgesehen sind, um den Stelltrieb (40) auf der Höhe der Feder (48) anzubinden, um die Rückholkraft, die durch ihn ausgeübt wird, konstant zu halten.

13. Vorrichtung nach einem der Ansprüche 7 bis 12, **dadurch gekennzeichnet,** daß das Gegenstück (50) einen Klemmring bildet, um ein Ende des Zopfes (12) auf dem Dorn (20) zu sperren.

14. Vorrichtung nach einem der Ansprüche 7 bis 13, **dadurch gekennzeichnet,** daß sie eine Speicherspule (60) des Zopfes (12) und Einrichtungen aufweist zum Drehantrieb der Speicherspule mit dem Dorn (20).

## Claims

1. Process for producing a laminated tubular fibrous structure from a tubular braid of which the wall is folded over itself so as to form corrugations superposed in axial direction, which process is characterized in that it comprises the steps consisting in :

— bringing the tubular braid (12) on a mandrel (20) of which the internal diameter corresponds to that of the structure to be produced, by causing the braid to pass around a forming head (34) which is mounted on the mandrel and of which the external diameter corresponds to that of the structure to be produced ; and

— in winding at least one yarn (70) according to a helical path over the braid, around the mandrel and at the front of the forming head, between the latter and a counter-part (50) of which the opposite faces have shapes corresponding to that of the corrugations to be formed, the winding of the yarn being performed while the forming head is progressively moved away from the counter-part, as the corrugations are being formed.

2. Process according to claim 1, characterized in that a constant restoring force is permanently exerted in order to urge the forming head and the counter-part towards each other.

3. Process according to claim 2, characterized in that the restoring force is exerted by means of a jack (40), via a spring (48), the jack (40) being automatically controlled at the level of the spring (48) for keeping the said restoring force constant.

4. Process according to any one of claims 1 to 3, characterized in that winding of the yarn is performed by driving the braid (12) in rotation about the axis of the mandrel (20).

5. Process according to claim 4, characterized in that the forming head (34) is held in a fixed angular position with respect to the axis of the mandrel (20), and the yarn (70) is guided through a passageway (38) formed in the forming head for causing the formation of the corrugations by deformation of the braid (12) by means of the yarn wound over the mandrel while being guided by the forming head.

6. Process according to any one of claims 1 to 5, characterized in that a plurality of yarns (70, 70', 70") are simultaneously wound on the braid (12) around the mandrel (20).

7. Device for producing a laminated tubular fibrous structure of which the wall is folded over itself so as to form corrugations superposed in axial direction, said device comprising :

— a rotating mandrel (20) of which the internal diameter corresponds to that of the structure to be produced,

— a forming head (34) mounted on the mandrel and of which the external diameter corresponds to that of the structure to be produced,

— a counter-part (50) mounted on the mandrel, in facing relationship to the forming head, the faces of the forming head and of the counter-part which are in facing relationship having shapes corresponding to that of the corrugations (16) to be formed, and one at least of the forming head and of the counter-part being movable according to a translatory movement in parallel to the axis of the mandrel,

— means for bringing the braid on the mandrel over the forming head and for fastening the braid in rotation with the mandrel, and

— means for bringing at least one yarn (70), for the purpose of winding it according to a helical path over the braid, around the mandrel and between the forming head and the counter-part, so as to form corrugations by deforming the braid by means of the yarn in front of the forming head while the counter-part and the forming head are progressively moved apart from each other in parallel to the axis of the mandrel.

8. Device according to claim 7, characterized in that the forming head (34) is locked in rotation around the axis of the mandrel (20) but is movable according to a translatory movement in parallel to said axis.

9. Device according to claim 8, characterized in that a passageway (38) is formed in the forming head (34) for guiding the yarn (70) wound on the braid (12) around the mandrel (20).

10. Device according to any one of claims 8 and 9, characterized in that the forming head (34) is movable according to a translatory movement under the action of a jack (40) via a rod (36) traversing a longitudinal passageway in the mandrel (20).

11. Device according to any one of claims 7 to 9, characterized in that it comprises means (48) for elastically urging the forming head (34) back towards the counter-part (50) by exerting a constant restoring force.

12. Device according to claim 11, characterized in that said elastic restoring means consist in a spring (48) interposed between the forming head (34) and a rod (36) of a jack (40) at the level of the spring (48) in oder to keep constant the restoring force exerted by the latter.

13. Device according to any one of claims 7 to 12, characterized in that the counter-part (50) forms a clamp for fastening one end of the braid (12) on the mandrel (20).

14. Device according to any one of claims 7 to 13, characterized in that it comprises a reel (60) for storing the braid (12) and means for driving the storage reel in rotation with the mandrel (20).

Fig. 1

Fig. 4

Fig. 5

Fig. 6

Fig. 7

Fig. 2

Fig. 3